# EUROPÄISCHE PATENTSCHRIFT

(11) **EP 2 242 622 B1**
(45) Veröffentlichungstag und Bekanntmachung des Hinweises auf die Patenterteilung: **07.08.2019**
(21) Anmeldenummer: 09707654.1
(22) Anmeldetag: 05.02.2009
(51) Int. Cl.: B25J 9/16, B29L 31/34, B29C 65/58, B29C 65/78, B29C 65/00, B29C 45/00

(54) **VERFAHREN UND VORRICHTUNG ZUM VERBINDEN VON FORMTEILEN**
METHOD AND DEVICE FOR CONNECTING MOULDED PIECES
PROCÉDÉ ET DISPOSITIF POUR ASSEMBLER DES PIÈCES MOULÉES

(30) Priorität: 09.02.2008 DE 102008008417
(43) Veröffentlichungstag der Anmeldung: 27.10.2010
(73) Patentinhaber: ABB AG, 68309 Mannheim (DE)
(72) Erfinder: MATTHIAS, Björn, 76669 Bad Schönborn (DE); WALDI, Wolfgang, 69226 Nussloch-Maisbach (DE); SOETEBIER, Sven, 68526 Ladenburg (DE)
(86) Internationale Anmeldenummer: PCT/EP2009/000791
(87) Internationale Veröffentlichungsnummer: WO 2009/098056

(56) Entgegenhaltungen:
- WO-A-2005/087451
- JP-A- 6 155 364
- JP-A- 9 164 555
- JP-A- 2000 238 090
- US-A- 5 060 368
- US-B1- 6 193 142

## Beschreibung

Die Erfindung betrifft ein Verfahren zum Verbinden von Formteilen, wobei wenigstens ein erstes Formteil in einem ersten Haltevorrichtungsteil gehalten ist und wobei wenigstens ein zweites Formteil in wenigstens einem zweiten Haltevorrichtungsteil gehalten ist.

Ein Beispiel für eine Positioniervorrichtung, mittels welcher Bauteile vor einem nachfolgenden Verbindungsvorgang in eine lagegenaue Position zueinander verbringbar sind, ist im Stand der Technik beispielsweise in der DE102004012592 B4 beschrieben.

Aus der JP061553464 ist eine einen an einer Fördervorrichtung angeordneten Roboter und eine Zuführvorrichtung umfassende Montagevorrichtung bekannt, welche dazu genutzt wird, Teile in andere Teile einzusetzen.

Es ist allgemein bekannt, dass technische Gebrauchsgegenstände wie Drucker, Netzteile oder Telefone mehrere miteinander verbundene Formteile aufweisen. Dieses können beispielsweise Grundplatten, Tasten, mechanische beziehungsweise elektrische Verbindungselemente, Deckel, aber auch elektronische Baugruppen sein, welche auf einer entsprechenden Platine vorgefertigt sind.

Bei der Herstellung eines derartigen Gebrauchsgegenstandes sind die verschiedenen Formteile und/oder Baugruppen zusammen mit weiteren Bauteilen und Verbindungselementen in einer entsprechenden Reihenfolge zu dem jeweiligen Endprodukt zusammenzufügen beziehungsweise mechanisch zu verbinden, wobei alle zu ver bindenden Komponenten beziehungsweise Baugruppen in diesem Zusammenhang jeweils als Formteil anzusehen sind.

Bevorzugte Verbindungsarten sind beispielsweise die formschlüssige Verbindung mehrerer Formteile, beispielsweise mittels einer Schnappnasenverbindung, mittels eines Zapfens an einem Formteil, der in eine entsprechende Aussparung eines weiteren Formteils eingreift, oder auch mittels einer Schraubverbindung. Derartige Verbindungen sind häufig dadurch gekennzeichnet, dass eine abschließende Verbindungsbewegung mit einer vorgegebenen Minimalkraft verbunden ist, beispielsweise bei der Bewegung einer Schnappnase in die entsprechende Aussparung, beim Klemmen von Formteilen ineinander, beim Stecken einer elektrischen Kabelverbindung oder aber auch beim Anziehen einer Schraube.

Ein technischer Gebrauchsgegenstand kann eine Vielzahl von Formteilen aufweisen, welche in einer Vielzahl von sequentiellen Verbindungsschritten miteinander verbunden werden. Es erweist sich in diesem Zusammenhang als sinnvoll, die Anzahl der Verbindungsschritte möglichst gering zu halten. Dieses erfolgt beispielsweise durch das zeitgleiche Verbinden von mehreren Einzelteilen, beispielsweise das Verbinden von Unterlegscheiben mit einer gemeinsamen Plattform, beispielsweise einer Grundplatte mit einer entsprechenden Anzahl an Zapfen, über welche die Unterlegscheiben zu legen sind.

Je nach zu fertigendem technischen Gebrauchsgegenstand und gegebenen Randbedingungen erfolgen derartige Verbindungsvorgänge vorzugsweise mit Hilfe von automatischen Vorrichtungen oder auch von Hand.

Bei der Verwendung von automatischen Vorrichtungen wird üblicherweise ein erstes Formteil von einer feststehenden Haltevorrichtung gehalten, während ein weiteres zu verbindendes Formteil mittels eines Manipulators, beispielsweise einem Roboter, in einer Verbindungsbewegung mit dem ersten Formteil verbunden wird.

Nachteilig an dieser Vorgehensweise ist insbesondere, dass an den Manipulator einerseits sehr hohe Ansprüche an die Bewegungsgenauigkeit gestellt werden, welche beispielsweise im Bereich von kleiner 0.1mm liegen. Andererseits stellen sich gleichzeitig aber auch Anforderungen an die Kraft, welche ein derartiger Manipulator in der Lage sein muss aufzubringen, wie bereits zuvor erläutert. Diese Kraft beträgt je nach Verbindungsart ohne weiteres mehrere 100 N.

Ausgehend von diesem Stand der Technik ist es Aufgabe der Erfindung, ein Verfahren und eine Vorrichtung zum Verbinden von Formteilen anzugeben, wobei die Anforderungen an die verwendeten Manipulatoren beziehungsweise Bewegungsvorrichtungen möglichst gering zu halten sind.

Diese Aufgabe wird erfindungsgemäß gelöst durch ein Verfahren der eingangs genannten Art mit den im Anspruch 1 angegebenen Merkmalen.

Demgemäß kennzeichnet sich das Verfahren dadurch, dass die Haltevorrichtungsteile in einem ersten Handhabungsschritt in eine Relativposition zueinander mit einer gemeinsamen Kontaktfläche bewegt werden und dass in einem zweiten Handhabungsschritt bei unveränderter Relativposition das wenigstens erste Formteil und das wenigstens zweite Formteil mittels wenigstens einer relativ zu einem der Haltevorrichtungsteile bewegbaren Bewegungsvorrichtung zueinander bewegt werden, bis eine durch Form- und/oder Kraftschluss hergestellte Verbindungsposition der jeweiligen Formteile zueinander mit gemeinsamer Kontaktfläche erreicht wird.

Die relative Verbindungsbewegung zwischen den zu verbindenden Formteilen wird auf die beschriebene Weise in einen ersten Handhabungsschritt mit einer hohen Anforderung an die Bewegungsgenauigkeit und geringen Anforderungen an die Bewegungskraft und einen zweiten Handhabungsschritt mit geringen Anforderungen an die Bewegungsgenauigkeit und hohen Anforderungen an die Bewegungskraft unterteilt. Die Anforderungen an die Genauigkeit des zweiten Handhabungsschrittes werden hierbei insbesondere durch eine hohe Maßhaltigkeit der verwendeten Haltevorrichtungen reduziert.

Somit ist es möglich, Bewegungen, welche für den ersten und den zweiten Handhabungsschritt notwendig sind, mittels Manipulatoren beziehungsweise Bewegungsvorrichtungen durchzuführen, welche genau auf die Anforderungen an die jeweilige Bewegung abgestimmt sind.

In vorteilhafter Weise kann die Konstruktion eines jeweiligen Manipulators beziehungsweise Bewegungsvorrichtung dadurch vereinfacht werden.

In einer bevorzugten Ausführungsform des erfindungsgemäßen Verfahrens ist die Bewegung der Haltevorrichtungsteile in die Relativposition zueinander zumindest abschnittsweise durch wenigstens einen mechanischen Führungsmechanismus geführt. Ein Führungsmechanismus ist beispielsweise ein konischer Zapfen in dem ersten Haltevorrichtungsteil und eine passende formschlüssige konische Vertiefung in dem wenigstens einen zweiten Haltevorrichtungsteil.

Auf diese Weise wird der abschließende Teil der Bewegung der Haltevorrichtungsteile in die Relativposition zueinander durch den konischen Zapfen geführt, welcher in die passende Vertiefung bewegt wird. Es sind aber auch andere Führungsmechanismen denkbar, beispielsweise gegeneinander versetzte schräge Ebenen oder komplementäre Freiformflächen an den jeweiligen Haltevorrichtungsteilen.

Auf diese Weise lässt sich auch die Anforderung an die Genauigkeit des Manipulators für den ersten Handhabungsschrittes in vorteilhafter Weise reduzieren.

In einer besonders bevorzugten Ausführungsform verbindet der wenigstens eine Führungsmechanismus den ersten Haltevorrichtungsteil mit dem wenigstens einen zweiten Haltevorrichtungsteil in der Relativposition in wenigstens einer Bewegungsrichtung miteinander.

Dies ist beispielsweise bei einem Stift an dem ersten Haltevorrichtungsteil der Fall, welcher in eine entsprechende Aussparung in dem zweiten Haltevorrichtungsteil eingreift. Linearbewegungen der Haltevorrichtungsteile zueinander in der Ebene senkrecht zur Ausrichtung des Stiftes sind hier unterbunden. Bei Verwendung eines weiteren Führungsmechanismus mit paralleler Ausrichtung sind sowohl Linearbewegungen als auch Drehbewegungen in der Ebene senkrecht zur Ausrichtung der Stifte unterbunden. Der einzige Freiheitsgrad der Bewegung der Haltevorrichtungsteile zueinander ist in diesem Fall entlang der Orientierung der Stifte.

In besonders günstiger Weise ist es hierdurch möglich, ein gegenseitiges Verschieben des ersten gegenüber eines zweiten Haltevorrichtungsteiles bei einer Krafteinwirkung zwischen den Haltevorrichtungsteilen zu unterbinden, sofern die Krafteinwirkung entlang eines unterbundenen Bewegungsfreiheitsgrades erfolgt. Derartige Krafteinwirkungen treten beispielsweise während des zweiten Handhabungsschrittes auf.

In einer weiteren Ausführungsform wird der erste Haltevorrichtungsteil und der wenigstens eine zweite Haltevorrichtungsteil vor Durchführung des zweiten Handhabungsschrittes form- und/oder in wenigstens einer Bewegüngsrichtung kraftschlüssig lösbar miteinander verbunden. Dies kann beispielsweise durch ein gegenseitiges Verhaken der Haltevorrichtungsteile während des ersten Handhabungsschrittes oder ein Umklammern der Haltevorrichtungsteile mittels einer geeigneten Klammervorrichtung erfolgen.

Auf diese Art ist ein gegenseitiges Verschieben der Haltevorrichtungsteile in Richtung der Verbindung in vorteilhafter Weise unterbunden.

In einer besonders bevorzugten Ausführungsform weist die Bewegung in wenigstens einem der beiden Handhabungsschritte genau einen Freiheitsgrad auf, beispielsweise entlang einer Geraden und/oder einem Segment einer Kreisbahn.

Dadurch kann die Konstruktion der jeweiligen Manipulatoren beziehungsweise Bewegungsvorrichtungen weiter vereinfacht werden.

In einer weiteren Ausgestaltungsform des erfindungsgemäßen Verfahrens wird im zweiten Handhabungsschritt bei der Bewegung der Formteile in die zweite Relativposition zueinander eine Widerstandskraft überwunden.

Auf diese Weise werden die zu verbindenden Formteile in eine Verbindungsposition überführt, aus der sie in vorteilhafter Weise nur durch Aufwendung einer in einer anderen Richtung einwirkenden Kraft gelöst werden können.

Das Verbinden weiterer Formteile mit bereits verbundenen Formteilen wird dadurch besonders erleichtert.

In einer weiteren Ausgestaltung des erfindungsgemäßen Verfahrens wird der erste und/oder der wenigstens eine zweite Haltevorrichtungsteil während des ersten Handhabungsschrittes durch jeweils einen geeigneten Manipulator bewegt, beispielsweise einen Roboter. Vorzugsweise verbleibt ein Haltevorrichtungsteil in einer ortsfesten Position, während eine weiterer Haltevorrichtungsteil bewegt wird.

In vorteilhafter Weise ist hierbei für den ersten Handhabungsschritt lediglich ein Manipulator notwendig, wobei es aber auch möglich ist, beide Haltevorrichtungsteile mit jeweiligen Manipulatoren gegeneinander zu bewegen.

In einer Ausführungsvariante des erfindungsgemäßen Verfahrens wird wenigstens ein Formteil bis zum Erreichen der Verbindungsposition in wenigstens einem Haltevorrichtungsteil mittels einer lösbaren Fixiervorrichtung gehalten wobei der Fixiervorrichtung nach Erreichen der Verbindungsposition geöffnet wird.

Durch das Öffnen des Fixiervorrichtung eines Haltevorrichtungsteils wird die durch Verbinden entstandene Baugruppe nur noch in dem anderen Haltevorrichtungsteil gehalten. Auf diese Weise lassen sich die Haltevorrichtungsteile aus der Relativposition mit gemeinsamer Kontaktfläche verfahren, wobei in günstiger Weise ein ungewolltes Lösen der Verbindung der Baugruppe vermieden wird.

In einer bevorzugten Ausgestaltung des erfindungsgemäßen Verfahrens werden der erste und der wenigstens eine zweite Haltevorrichtungsteil nach Verbinden der Formteile in eine weitere Relativposition zueinander ohne eine gemeinsame Kontaktfläche bewegt, wobei die verbundenen Formteile als Baugruppe zunächst in einem der Haltevorrichtungsteile verbleiben.

In einer Serienproduktion wird der nunmehr leere Haltevorrichtungsteil in weiteren Arbeitsschritten mit weiteren Formteilen bestückt, welche in vergleichbarer Weise mit nachfolgenden Formteilen oder Baugruppen verbunden werden. Es ist aber auch im Gedanken der Erfindung, wenn ein Haltevorrichtungsteil beispielsweise ein Magazin aufweist, innerhalb dessen sich zumindest mehrere oder auch eine Vielzahl gleichartiger Formteile befinden, welche in einer Serienproduktion sequentiell verbunden beziehungsweise verbaut werden.

Somit werden weitere Arbeitsschritte für den Zusammenbau eines nächsten technischen Gebrauchsgegenstandes im Rahmen einer Serienproduktion durchführbar.

In einer Ausgestaltungsform des Verfahrens wird derjenige Haltevorrichtungsteil, in welchem sich die verbundene Baugruppe beziehungsweise die verbundenen Formteile befinden, danach in eine weitere Arbeitsposition bewegt, beispielsweise über ein Fließband.

In vorteilhafter Weise kann somit der erste oder der wenigstens eine zweite Haltevorrichtungsteil im Falle einer Serienproduktion am selben Ort verbleiben. Der technische Aufwand wird dadurch weiter reduziert.

In einer weiteren Ausgestaltung werden weitere Formteile mit der verbundenen Baugruppe verbunden.

Somit ist ein sequentieller Zusammenbau einer Vielzahl von einzelnen Formteilen zu einer komplexen Baugruppe ermöglicht.

Die Aufgabe wird auch gelöst durch eine Verbindungsvorrichtung zum Verbinden von Formteilen mit einem ersten und wenigstens einem zweiten Haltevorrichtungsteil zum Halten von jeweils wenigstens einem Formteil, die dadurch gekennzeichnet ist, dass der erste und der wenigstens eine zweite Haltevorrichtungsteil in eine Relativposition mit gemeinsamer Kontaktfläche bewegbar sind und dass wenigstens eine der Haltevorrichtungsteile wenigstens eine Bewegungsvorrichtung aufweist, durch welchen ein jeweiliges Formteil relativ zum jeweiligen Haltevorrichtungsteil von einer Anfangs- in eine jeweilige Endposition bewegbar ist.

Durch diese Anordnung ist der Verbindungsvorgang von Formteilen in mehrere Arbeitsschritte aufteilbar. Die gemeinsame Kontaktfläche der Haltevorrichtungsteile begünstigt ein genaues Erreichen der Relativposition der Haltevorrichtungsteile zueinander. Die Anordnung der wenigstens einen Bewegungsvorrichtung an einer der beiden Haltevorrichtungen begünstigt eine einfache Verbindungsbewegung von Formteilen, wobei durch den beschriebenen Aufbau höhere Krafteinwirkung, beispielsweise ohne weiteres 100N und mehr, bei geringen Anforderungen an die Bewegungsgenauigkeit der Bewegungsvorrichtung ermöglicht sind.

Dies vereinfacht den mechanischen Aufbau der Bewegungsvorrichtung für die Bewegung der Formteile von der Anfangs- in die Endposition in vorteilhafter Weise.

In einer bevorzugten Ausführungsform der Verbindungsvorrichtung weist wenigstens einer der Haltevorrichtungsteile wenigstens eine Fixiervorrichtung zum Fixieren und/oder Halten eines Formteiles auf.

Auf diese Weise erfolgt die Positionierung eines Formteils innerhalb des betreffenden Haltevorrichtungsteiles mit besonders geringen Toleranzen. Der weitere Verbindungsvorgang wird dadurch genauer.

In einer weiteren Ausgestaltung der erfindungsgemäßen Verbindungsvorrichtung ist die Fixiervorrichtung lösbar.

Auf diese Weise lässt sich die Halteverbindung eines Formteils nach erfolgter Verbindung von Formteilen öffnen und die nunmehr entstandene Baugruppe löst sich in besonders einfacher Weise bei Auseinanderbewegung der Haltevorrichtungsteile von der Relativposition in eine weitere Position aus dem betreffenden Haltevorrichtungsteil.

In einer besonders bevorzugten Variante der erfindungsgemäßen Verbindungsvorrichtung weisen der erste Haltevorrichtungsteil und der wenigstens eine zweite Haltevorrichtungsteil einen gegenseitigen Führungsmechanismus auf, durch welchen eine gegenseitige Bewegung in die Relativposition zueinander zumindest abschnittsweise führbar ist. Dies ist beispielsweise ein konischer Zapfen an dem ersten Haltevorrichtungsteil und eine passende konische Vertiefung an dem wenigstens einen zweiten Haltevorrichtungsteil.

Somit können in vorteilhafter Weise ein Manipulator oder eine Bewegungsvorrichtung, durch welche die Haltevorrichtungsteile in die Relativposition bewegbar sind, bezüglich der Genauigkeitsanforderungen vereinfacht werden.

In einer Ausführungsform der erfindungsgemäßen Verbindungsvorrichtung sind wenigstens zwei Haltevorrichtungsteile durch den jeweiligen Führungsmechanismus in ihrer Relativposition zueinander zumindest in einer Bewegungsrichtung kraftschlüssig miteinander verbindbar.

Auf diese Weise ist aufgrund einer Krafteinwirkung der wenigstens einen Bewegungsvorrichtung, durch welche die Formteile von der Anfangs- in die Endposition bewegbar sind, eine gegenseitige Bewegung der Haltevorrichtungsteile zueinander zumindest in dieser Bewegungsrichtung in vorteilhafter Weise nicht möglich.

In einer weiteren Variante der erfindungsgemäßen Verbindungsvorrichtung sind wenigstens zwei Haltevorrichtungsteile in ihrer Relativposition zueinander durch ein geeignetes Hilfsmittel zumindest in einer Bewegungsrichtung kraftschlüssig und lösbar miteinander verbindbar, beispielsweise durch eine Klammer.

Auch auf diese Weise werden gegenseitige Bewegungen der Haltevorrichtungsteile bei Krafteinwirkung in vorgegebener Richtung in günstiger Weise ausgeschlossen.

In einer besonders vorteilhaften Ausgestaltung der erfindungsgemäßen Verbindungsvorrichtung weist wenigstens eine der Haltevorrichtungsteile ein erstes Bauteil und ein zweites Bauteil auf, welche bei Einwirken einer Kraft entlang einer vorgegebenen Führungsbahn von einer Anfangsposition in eine Endposition zueinander bewegbar sind. Das erste Bauteil weist die wenigstens eine Fixiervorrichtung auf und das zweite Bauteil ist mit einem Manipulator verbindbar. Eine derartige Verbindung kann beispielsweise in Form eines Stiftes an dem ersten Bauteil bestehen, welcher in ein entsprechendes Loch in dem zweiten Bauteil eingreift, wobei um diesen Stift beispielsweise eine zusammengedrückte Feder angeordnet ist, so dass eine gegenseitige Bewegung der beiden Bauteile entlang der Führung durch den Stift erst bei Vorhandensein einer bestimmten Kraft ermöglicht ist.

Somit ist eine relative Bewegung des ersten und des wenigstens einen zweiten Haltevorrichtungsteils in die Relativposition im Moment des entstehenden Kontaktes in vorteilhafter Weise vor mechanischen Stößen geschützt, welche auf den Manipulator übertragen werden. Der Aufbau eines Manipulators zur Bewegung der Haltevorrichtung kann damit vereinfacht werden.

In einer Ausführungsform der erfindungsgemäßen Verbindungsvorrichtung weist die wenigstens eine Bewegungsvorrichtung genau einen Freiheitsgrad der Bewegung auf, beispielsweise entlang einer Geraden und/oder einem Segment einer Kreisbahn. Dies ist beispielsweise durch einen Metallstift realisierbar, welcher beweglich in einer Bohrung des betreffenden Haltevorrichtungsteils gelagert ist. An seiner dem zu verbindenden Formteil zugewandten Seite ist beispielsweise eine Kontaktplatte angeordnet, durch welche ein Verkratzen des Formteiles vermieden wird und an der abgewandten Seite ein Stiftmanipulator. Durch diesen Stiftmanipulator ist der Stift lediglich entlang der Ausrichtung der Bohrung bewegbar. Die Genauigkeitsanforderungen an den Stiftmanipulator sind ebenfalls gering, weil die Führung des Stiftes durch die Bohrung erfolgt.

Dadurch werden die mechanischen Anforderungen an die wenigstens eine Bewegungsvorrichtung in vorteilhafter Weise reduziert.

In einer bevorzugten Ausführungsform der Verbindungsvorrichtung ist wenigstens ein Haltevorrichtungsteil mittels eines geeigneten Manipulators bewegbar. Dieser Manipulator kann beispielsweise ein Roboter sein. Es ist aber auch im Gedanken der Erfindung, dass der Manipulator lediglich einen Bewegungsfreiheitsgrad aufweist, sofern dies mit den Anforderungen an die jeweilige Verbindungsbewegung vereinbar ist.

Somit sind die Haltevorrichtungsteile gegeneinander bewegbar.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein Beispiel für einen ersten Haltevorrichtungsteil,
- Fig. 2: ein Beispiel für einen zweiten Haltevorrichtungsteil,
- Fig. 3: ein Beispiel für eine Verbindungsvorrichtung' und eine Verbindungsvorrichtung" sowie
- Fig. 4: ein Beispiel für einen erfindungsgemäßen Verfahrensablauf

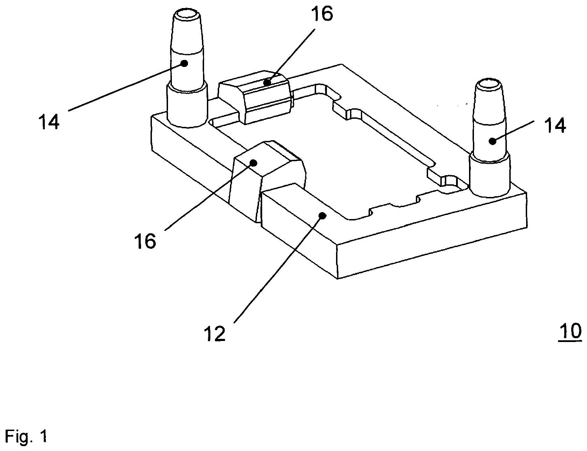

Fig. 1 zeigt ein Beispiel für einen ersten Haltevorrichtungsteil 10. Dieser weist einen Rahmen 12 auf, der dafür eingerichtet ist, ein nicht gezeigtes Formteil zu halten. Dies ist beispielsweise eine schalenförmige Bodenplatte mit rechteckigem Grundriss und Seitenwänden. Zur Fixierung des Formteils ist eine Fixiervorrichtung 16 vorgesehen. Es sind verschiedene Ausführungsformen der Fixiervorrichtung 16 denkbar, beispielsweise eine massive Form aus einem harten Material wie Metall oder Kunststoff. Dies ist insbesondere dann von Vorteil, wenn das zu haltende Formteil selbst eine Federeigenschaft aufweist, wie beispielsweise eine schalenförmige Bodenplatte aus Kunststoff. Während einer Platzierung einer derartigen Bodenplatte in der Haltevorrichtung geben die Seitenwände des Formteils nach und nach erfolgter Platzierung ist eine Kraft aufzuwenden, um das Formteil von seiner Position zu entfernen.

Es ist aber auch denkbar, dass das besagte Formteil aus einem harten Material besteht, beispielsweise einem Metall. In diesem Fall sind die Fixiervorrichtungen 16 federnd auszugestalten, beispielsweise als gebogene Blattfeder. Auch durch diese Ausführungsform ist gewährleistet, dass ein Formteil sowohl platzierbar ist, als auch, dass es erst durch Aufwendung einer Kraft aus dem Haltevorrichtungsteil entnehmbar ist.

Fig. 1 zeigt weiterhin zwei zapfenförmige Führungselemente 14, die an einem Ende mit dem Rahmen 12 verbunden sind. Diese weisen einen konusförmigen Endbereich auf und dienen der Führung eines zweiten Haltevorrichtungsteils bei Bewegung der Haltevorrichtungsteile in eine Relativposition zueinander.

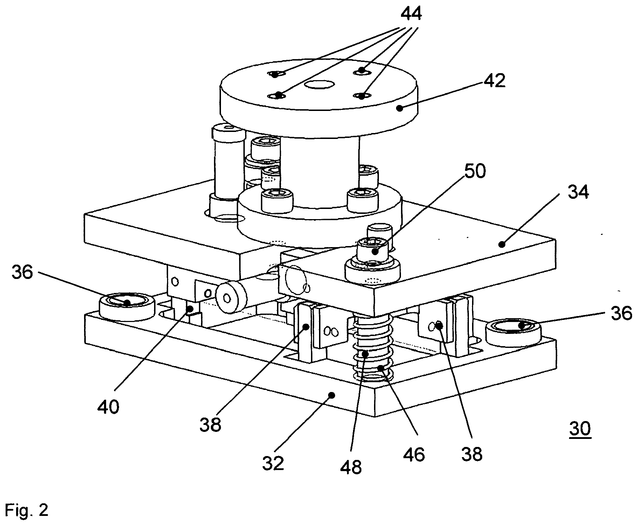

Fig. 2 zeigt ein Beispiel eines zweiten Haltevorrichtungsteils 30, welcher das Oberteil zu dem in Fig. 1 dargestellten Haltevorrichtungsteil ist. Dieser weist ein erstes Bauteil, einen ersten Rahmen 32, und ein zweites Bauteil, einen zweiten Rahmen 34, auf. Der erste Rahmen 32 ist derjenige Teil des zweiten Haltevorrichtungsteils 30, welcher in einer Relativposition zu einem nicht gezeigten ersten Haltevorrichtungsteil eine gemeinsame Kontaktfläche mit diesem ausbildet. Die Bohrungen 36 sind das jeweilige Gegenstück zu einem in Fig. 1 gezeigten zapfenförmigen Führungselementen 14. Der erste Rahmen 32 ist über einen zylinderförmigen Stift 48 mit dem zweiten Rahmen 34 beweglich verbunden, wobei der Stift 48 eine auf diesen angepasste Bohrung im zweiten Rahmen 34 durchgreift. Am oberen Ende des Stiftes 48 ist ein Anschlag 50 in Form einer Gewindemutter befestigt, durch welchen der maximale Abstand zwischen dem ersten Rahmen 32 und dem zweiten Rahmen 34 vorgegeben ist. Eine Feder 46 übt eine ständige Druckkraft zwischen dem ersten Rahmen 32 und dem zweiten Rahmen 34 aus, so dass diese ihren maximalen Abstand zueinander aufweisen.

Fernerhin gezeigt in Fig. 2 sind mit dem ersten Rahmen 32 verbundene bewegbare Arretiergreifer 38, welche zum Halten und Fixieren eines zu haltenden Formteiles dienen, beispielsweise einer Oberschale mit rechteckigem Grundriss. Diese Arretiergreifer 38 sind mittels eines nicht gezeigten Arretiermanipulators in der Ebene, welche durch die flächige Ausdehnung des ersten Rahmens 32 aufgespannt wird, in Richtung des Formteils entlang einer geraden Linie bewegbar. Vorzugsweise sind die Arretiergreifer 38 derart miteinander verbunden, dass eine Bewegung eines Arretiermanipulators an alle Arretiergreifer 38 übertragbar ist. Somit ist die Anzahl der für das Halten benötigten Arretiermanipulatoren in vorteilhafter Weise reduziert.

Bei Platzierung eines Formteils in dem zweiten Haltevorrichtungsteil sind die Arretiergreifer 38 zunächst mittels des Arretiermanipulators zu lösen, so dass das Formteil in der Haltevorrichtung platzierbar ist. Nach Platzierung des Formteils sind die Arretiergreifer 38 zu schließen, so dass das Formteil gehalten wird.

Die Bewegungsvorrichtung 40 ist dafür vorgesehen, eine zusätzliche Linearbewegung durchzuführen, um eine Bewegung des Formteiles relativ zur zweiten Haltevorrichtung 30 in der durch den ersten Rahmen 32 aufgespannten Ebene durchzuführen.

Als besonders vorteilhaft erweist es sich in diesem Fall, wenn eine gegenseitige Bewegung der Haltevorrichtungsteile durch den Führungsmechanismus 36 und 14 verhindert wird. Somit kann durch die wenigstens eine Bewegungsvorrichtung 40 auch eine verhältnismäßig hohe Kraft, in diesem Fall beispielsweise 20 N, erzeugt werden, ohne dass ein gegenseitiges Verschieben der Haltevorrichtungsteile in ihrer Relativposition zueinander zu erwarten ist.

Eine Befestigungsvorrichtung 42, welche mit dem zweiten Rahmen 34 verbunden ist, ist dafür vorgesehen, eine kraftschlüssige Verbindung des zweiten Haltevorrichtungsteils 30 mit einem Manipulator zu ermöglichen, beispielsweise einem Roboter mit 6 Bewegungsfreiheitsgraden. Die Flanschplatte des Roboters ist über die Verbindungslöcher 44 mit dem zweiten Haltevorrichtungsteil 30 verbindbar.

Ein Roboter ist insbesondere dann zu verwenden, wenn das produktionstechnische Umfeld eine hohe Anzahl an Bewegungsfreiheitsgraden des zweiten Haltevorrichtungsteils 30 erfordert. Fernerhin weist ein Roboter üblicherweise die höchste Positioniergenauigkeit auf. Die Verwendung eines Roboters ist beispielsweise sinnvoll, wenn ein leerer zweiter Haltevorrichtungsteil 30 vor dem Verbindungsvorgang zu einer oder mehreren Bearbeitungsstationen zu bewegen ist, um dort ein neues Formteil für den nachfolgenden Verbindungsvorgang aufzunehmen.

Unter Umständen ist als Manipulator aber auch beispielsweise eine Bewegungsvorrichtung mit drei Bewegungsfreiheitsgraden ausreichend, nämlich ein X-Y Manipulator, welcher zudem auch in Z-Richtung bewegbar ist. Sogar ein Manipulator mit einem einzigen Bewegungsfreiheitsgrad ist im Gedanken der Erfindung, welche ja die Ausgestaltung von verwendeten Bewegungsvorrichtungen beziehungsweise Manipulatoren durch möglichst einfache Bewegungsvorgänge zu vereinfachen sucht.

Nachfolgend sei anhand der Fig. 1 und Fig. 2 ein Verbindungsablauf erläutert. Ein erster Haltevorrichtungsteil 10 hält ein erstes Formteil und ein zweiter Haltevorrichtungsteil 30 hält ein zweites Formteil. Das erste Formteil wird durch die Federkraft der Fixiervorrichtungen 16 gehalten, das zweite Formteil ist durch die lösbaren Arretiervorrichtungen 38 gehalten. Der erste Haltevorrichtungsteil befindet sich auf einer stillstehenden Fördervorrichtung in einer ersten Arbeitsstation. Nun wird mittels eines Roboters der zweite Haltevorrichtungsteil 30 in Richtung des ersten Haltevorrichtungsteils 10 bewegt. Vor Erreichen der Relativposition mit gemeinsamer Kontaktfläche der beiden Haltevorrichtungsteile 10, 30 greifen die Zapfen 14 des ersten Haltevorrichtungsteils und die Bohrungen 36 des zweiten Haltevorrichtungsteils ineinander und der abschließende Teil der Bewegung ist hierdurch geführt. Diese Bewegung erfolgt in diesem Fall ohne Überwinden einer Widerstandskraft.

Nach Erreichen der Relativposition wird das zweite Formteil mittels der Bewegungsvorrichtung 40 parallel zum ersten Formteil bewegt, bis eine Verbindung zwischen den beiden Formteilen hergestellt ist, beispielsweise durch eine Schnappnasenverbindung. Nun sind die Formteile miteinander verbunden. Diese zweite Bewegung erfolgt unter Überwindung einer Widerstandskraft, welche durch die Schnappnasenverbindung bedingt ist.

Die Arretiergreifer 38 werden gelöst und der Roboter bewegt den zweiten Haltevorrichtungsteil 30 fort, beispielsweise zu einer in seinem Arbeitsbereich liegenden Station, in der ein weiteres gleichartiges Formteil in dem zweiten nunmehr leeren Haltevorrichtungsteil 30 platziert wird. Die so entstanden Baugruppe von zwei verbundenen Formteilen wird nach wie vor durch die Federkraft der Fixiervorrichtungen 16 in dem ersten Haltevorrichtungsteil gehalten. Zwischenzeitlich wird der erste Haltevorrichtungsteil 10 mittels der Fördervorrichtung in eine zweite Arbeitsstation verbracht, wo weitere Formteile mit der in ihr befindlichen Baugruppe verbunden werden. Zeitgleich wird mittels der Fördervorrichtung ein weiterer erster Haltevorrichtungsteil mit einem weiteren ersten Formteil in die erste Arbeitsstation verfahren. Der Verbindungsvorgang kann somit beliebig oft wiederholt werden.

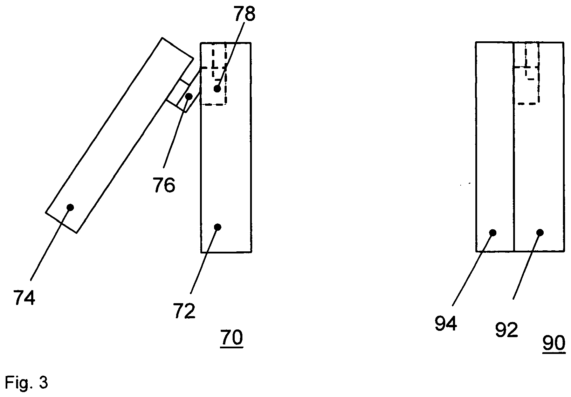

Fig. 3 zeigt ein Beispiel einer Verbindevorrichtung' 70. Diese Verbindevorrichtung' 70 weist einen schematisch skizzierten ersten Haltevorrichtungsteil' 72 und einen zweiten Haltevorrichtungsteil' 74 auf, welche sich nicht in einer Relativposition mit gemeinsamer Kontaktfläche befinden. Fernerhin zeigt Fig. 3 ein Verbindungselement 76 des zweiten Haltevorrichtungsteils' 74, welches teilweise in eine Verbindungsnut 78 des ersten Haltevorrichtungsteils' 72 eingreift. Auf diese Weise ist während der Bewegung der Haltevorrichtungsteile in die Relativposition bereits eine kraftschlüssige Verbindung der Haltevorrichtungsteile möglich.

Fig. 3 zeigt weiterhin ein Beispiel einer Verbindevorrichtung" 90, welche ein schematisch skizziertes erstes Haltevorrichtungsteil" 92 und ein zweites Haltevorrichtungsteil" 94 aufweist, welche sich in einer Relativposition mit gemeinsamer Kontaktfläche befinden. Die Verbindevorrichtung" 90 entspricht darüber hinaus im Wesentlichen der Verbindevorrichtung' 70, bei der Haltevorrichtungsteile' durch eine geeignete gegenseitige Bewegung in eine Relativposition mit gemeinsamer Kontaktfläche überführt wurden.

Der erste Haltevorrichtungsteil" 92 und der zweite Haltevorrichtungsteil" 94 werden an ihrem oberen Ende durch den nur schematisch angedeuteten Verbindungsmechanismus 76, 78 in ihrer Relativposition an ihrem oberen dargestellten Ende kraftschlüssig verbunden.

Somit werden eventuelle Kräfte, welche durch eine nicht dargestellte Bewegungsvorrichtung zwischen dem ersten 92 und dem zweiten 94 Haltevorrichtungsteil" auftreten, zumindest teilweise durch die kraftschlüssige Verbindung aufgenommen.

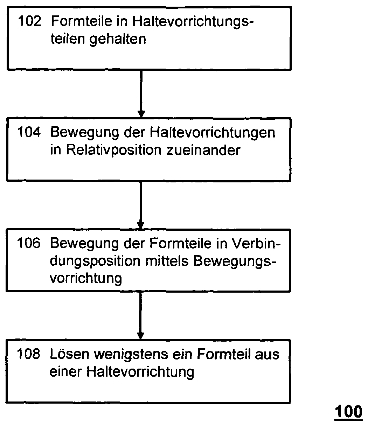

Fig. 4 skizziert beispielhaft einen erfindungsgemäßen Ablauf 100 des erfindungsgemäßen Verfahrens zum Verbinden von Formteilen. In einem ersten Verfahrensschritt 102 werden zu verbindenden Formteile in wenigstens einem ersten und einem zweiten Haltevorrichtungsteil gehalten. In einem zweiten Verfahrensschritt 104, welcher dem ersten Handhabungsschritt entspricht, werden die Haltevorrichtungsteile in eine gemeinsame Relativposition mit gemeinsamer Kontaktfläche bewegt, wobei diese Bewegung vorzugsweise ohne Überwindung einer Widerstandskraft erfolgt, wodurch die mechanische Konstruktion dafür benötigter Manipulatoren vereinfacht wird. In einem dritten Verfahrensschritt 106, welcher dem zweiten Handhabungsschritt entspricht, werden die Formteile mittels einer an einem Haltevorrichtungsteil montierten Bewegungsvorrichtung in eine Verbindungsposition überführt, wobei eventuelle Widerstandskräfte beim Verbindungsvorgang überwunden werden. Die hierfür benötigte Bewegung hat vorzugsweise möglichst wenig Bewegungsfreiheitsgrade, so dass die mechanische Konstruktion dafür benötigter Manipulatoren vereinfacht wird. In einem letzten Verfahrensschritt 108 wird wenigstens ein Formteil aus einem der Haltevorrichtungsteile gelöst. So ist es möglich, in einen leeren Haltevorrichtungsteil weitere Formteile aufzunehmen und in einer Serienproduktion entsprechend dem beschriebenen Ablauf weitere Verbindungsvorgänge 100 durchzuführen.

### Bezugszeichenliste

- 10: Beispiel für ersten Haltevorrichtungsteil
- 12: Rahmen
- 14: Führungselement
- 16: Fixiervorrichtung
- 30: Beispiel für zweiten Haltevorrichtungsteil
- 32: erster Rahmen
- 34: zweiter Rahmen
- 36: Gegenstück Führungselement
- 38: Arretiergreifer
- 40: Bewegungsvorrichtung
- 42: Befestigungsvorrichtung
- 44: Verbindungslöcher
- 46: Führungsbolzen
- 48: Feder
- 50: Anschlag
- 70: Beispiel einer Haltevorrichtung'
- 72: Erster Haltevorrichtungsteil'
- 74: Zweiter Haltevorrichtungsteil'
- 76: Verbindungselement
- 78: Verbindungsnut
- 90: Beispiel einer Haltevorrichtung"
- 92: Erster Haltevorrichtungsteil"
- 94: Zweiter Haltevorrichtungsteil"
- 100: Beispiel für einen Verfahrensablauf
- 102: Erster Verfahrensschritt
- 104: Zweiter Verfahrensschritt
- 106: Dritter Verfahrensschritt
- 108: Vierter Verfahrensschritt

## Patentansprüche

1. Verfahren zum Verbinden von Formteilen, wobei wenigstens ein erstes Formteil in einem ersten Haltevorrichtungsteil (10) gehalten ist, wobei wenigstens ein zweites Formteil in wenigstens einem zweiten Haltevorrichtungsteil (30) gehalten ist, wobei das zweite Haltevorrichtungsteil (30) einen ersten flächig ausgedehnten Rahmen (32) aufweist, in dem das Formteil gehalten ist, wobei die Haltevorrichtungsteile (10, 30) in einem ersten Handhabungsschritt in eine Relativposition zueinander mit einer gemeinsamen Kontaktfläche bewegt werden, wobei die Kontaktfläche als gemeinsame Kontaktfläche des ersten flächig ausgebildeten Rahmens (32) mit dem ersten Haltevorrichtungsteil (10) ausgebildet ist, **dadurch gekennzeichnet, dass** in einem zweiten Handhabungsschritt bei unveränderter Relativposition das wenigstens erste Formteil und das wenigstens zweite Formteil mittels wenigstens einer relativ zu einem der Haltevorrichtungsteile (10, 30) bewegbaren Bewegungsvorrichtung (40) zueinander in der Ebene, welche durch die flächige Ausdehnung des ersten Rahmens (32) aufgespannt wird, bewegt werden, bis eine durch Form- und/oder Kraftschluss hergestellte Verbindungsposition der jeweiligen Formteile zueinander mit gemeinsamer Kontaktfläche erreicht wird.

2. Verfahren nach Anspruch 1, **dadurch gekennzeichnet, dass** die Bewegung der Haltevorrichtungsteile (10, 30, 72, 74, 92, 94) in die Relativposition zueinander zumindest abschnittsweise durch wenigstens einen mechanischen Führungsmechanismus (14, 36) geführt wird, beispielsweise mittels eines konischen Zapfens (14) an einer der Haltevorrichtungsteile (10, 30) der mit einer passenden formschlüssigen konischen Vertiefung (36) des anderen Haltevorrichtungsteils (10, 30) zusammenwirkt.

3. Verfahren nach Anspruch 2, **dadurch gekennzeichnet, dass** durch den wenigstens einen Führungsmechanismus (14, 36) der erste Haltevorrichtungsteil (10) mit dem wenigstens einen zweiten Haltevorrichtungsteil (30) nach Erreichen der Relativposition zueinander in wenigstens einer Bewegungsrichtung miteinander verbunden wird.

4. Verfahren nach einem der vorangegangenen Ansprüche, **dadurch gekennzeichnet, dass** der erste Haltevorrichtungsteil (10) und der wenigstens eine zweite Haltevorrichtungsteil (30) vor Durchführung des zweiten Handhabungsschrittes in wenigstens einer Bewegungsrichtung miteinander verbunden werden, beispielsweise durch ein gegenseitiges Verhaken (76, 78) der Haltevorrichtungsteile (72, 74, 92, 94) während des ersten Handhabungsschrittes oder ein Umklammern der Haltevorrichtungsteile mittels einer geeigneten Verbindevorrichtung.

5. Verfahren nach einem der vorangegangenen Ansprüche, **dadurch gekennzeichnet, dass** die Bewegung in wenigstens einem der beiden Handhabungsschritte genau einen Freiheitsgrad aufweist, beispielsweise entlang einer Geraden und/oder einem Segment einer Kreisbahn.

6. Verfahren nach einem der vorangegangenen Ansprüche, **dadurch gekennzeichnet, dass** in dem zweiten Handhabungsschritt bei der Bewegung der Formteile in die Verbindungsposition eine Widerstandskraft überwunden wird, welche durch die Art der Verbindung der zu verbindenden Formteile vorgegeben ist.

7. Verfahren nach einem der vorangegangenen Ansprüche, **dadurch gekennzeichnet, dass** der erste (10) und/oder der wenigstens eine zweite Haltevorrichtungsteil (30) während des ersten Handhabungsschrittes durch jeweils einen geeigneten Manipulator bewegt werden.

8. Verfahren nach einem der vorangegangenen Ansprüche, **dadurch gekennzeichnet, dass** wenigstens ein Formteil bis zum Erreichen der Verbindungsposition in wenigstens einem Haltevorrichtungsteil mittels eines öffenbaren Fixiervorrichtung (38) gehalten wird und dass diese Fixiervorrichtung (38) nach Erreichen der Verbindungsposition geöffnet wird.

9. Verfahren nach einem der vorangegangenen Ansprüche, **dadurch gekennzeichnet, dass** der erste (10) und der wenigstens eine zweite Haltevorrichtungsteil (30) nach Verbinden der Formteile in eine weitere Relativposition zueinander ohne gemeinsame Kontaktfläche bewegt werden, wobei die verbundenen Formteile als Baugruppe zunächst in einem der Haltevorrichtungsteile (10, 30) verbleiben.

10. Verfahren nach Anspruch 9, **dadurch gekennzeichnet, dass** derjenige Haltevorrichtungsteil (10, 30), in welchem sich die Baugruppe beziehungsweise die verbundenen Formteile befinden, von einer Montageposition in eine weitere Montageposition bewegt wird.

11. Verfahren nach Anspruch 9 oder 10, **dadurch gekennzeichnet, dass** weitere Formteile mit der Baugruppe verbunden werden.

12. Verbindungsvorrichtung zum Verbinden von Formteilen mit einem ersten (10) und wenigstens einem zweiten Haltevorrichtungsteil (30) zum Halten von jeweils wenigstens einem Formteil, wobei das zweite Haltevorrichtungsteil (30) einen ersten flächig ausgedehnten Rahmen (32) aufweist, in dem das Formteil gehalten ist, wobei das erste (10) und das wenigstens eine zweite (30) Haltevorrichtungsteil in eine Relativposition mit gemeinsamer Kontaktfläche bewegbar sind, wobei die Kontaktfläche als gemeinsame Kontaktfläche des ersten flächig ausgebildeten Rahmens (32) mit dem ersten Haltevorrichtungsteil (10) ausgebildet ist, **dadurch gekennzeichnet, dass** wenigstens eines der Haltevorrichtungsteile wenigstens eine Bewegungsvorrichtung (40) aufweist, durch welche ein jeweiliges Formteil in der Ebene, welche durch die flächige Ausdehnung des ersten Rahmens (32) aufgespannt wird relativ zum jeweiligen Haltevorrichtungsteil von einer Anfangs- in eine jeweilige Endposition bewegbar ist.

13. Verbindungsvorrichtung nach Anspruch 12, **dadurch gekennzeichnet, dass** wenigstens einer der Haltevorrichtungsteile wenigstens eine Fixiervorrichtung (16, 38) zum Fixieren und/oder Halten eines Formteiles aufweist.

14. Verbindungsvorrichtung nach Anspruch 13, **dadurch gekennzeichnet, dass** die Fixiervorrichtung (38) lösbar ist.

15. Verbindungsvorrichtung nach einem der Ansprüche 12 bis 14, **dadurch gekennzeichnet, dass** der erste Haltevorrichtungsteil (10) und der wenigstens eine zweite Haltevorrichtungsteil (30) mit aufeinander angepassten Führungselementen zusammenwirken, durch welche eine gegenseitige Bewegung in Richtung der Relativposition zueinander führbar ist.

16. Verbindungsvorrichtung nach Anspruch 15, **dadurch gekennzeichnet, dass** wenigstens zwei Haltevorrichtungsteile (10, 30) durch den jeweiligen Führungsmechanismus (14, 36) in ihrer Relativposition zueinander zumindest in einer Bewegungsrichtung kraftschlüssig miteinander verbindbar sind.

17. Verbindungsvorrichtung nach einem der Ansprüche 12 bis 16, **dadurch gekennzeichnet, dass** wenigstens zwei Haltevorrichtungsteile (10, 30) in ihrer Relativposition zueinander durch ein geeignetes Verbindungsmittel zumindest in einer Bewegungsrichtung miteinander verbindbar sind.

18. Verbindungsvorrichtung nach einem der Ansprüche 12 bis 17, **dadurch gekennzeichnet, dass** wenigstens einer der Haltevorrichtungsteile (10, 30) ein erstes Bauteil (32) und ein zweites Bauteil (34) aufweisen, welche bei Einwirken einer Kraft entlang einer vorgegebenen Führungsbahn (48) von einer Anfangsposition in eine Endposition zueinander bewegbar sind, wobei das erste Bauteile (32) den wenigstens einen Fixiervorrichtung (38) aufweist und das zweite Bauteil mit einem Manipulator verbindbar ist.

19. Verbindungsvorrichtung nach einem der Ansprüche 12 bis 18, **dadurch gekennzeichnet, dass** die wenigstens eine Bewegungsvorrichtung (40) genau einen Freiheitsgrad der Bewegung aufweist, beispielsweise entlang einer Geraden und/oder einem Segment einer Kreisbahn.

20. Verbindungsvorrichtung nach einem der Ansprüche 12 bis 19, **dadurch gekennzeichnet, dass** wenigstens ein Haltevorrichtungsteil (10, 30) mittels eines geeigneten Manipulators bewegbar ist, beispielsweise einem Roboter.

## Claims

1. Method for connecting molded pieces, at least one first molded piece being held in a first holding device part (10), at least one second molded piece being held in at least one second holding device part (30), the second holding device part (30) having a first two-dimensionally extended frame (32) in which the molded piece is held, in a first handling step, the holding device parts (10, 30) being moved into a relative position in relation to one another with a common contact area, the contact area being configured as a common contact area of the first two-dimensionally configured frame (32) with the first holding device part (10), **characterized in that**, in a second handling step, with an unchanged relative position, the at least first molded piece and the at least second molded piece are moved in relation to one another in the plane which is spanned by the two-dimensional extent of the first frame (32) by means of at least one moving device (40) that can be moved in relation to one of the holding device parts (10, 30), until a connecting position established by a form and/or force fit of the respective molded pieces in relation to one another with a common contact area is achieved.

2. Method according to Claim 1, **characterized in that** the movement of the holding device parts (10, 30, 72, 74, 92, 94) into the relative position in relation to one another is guided at least in certain phases by at least one mechanical guiding mechanism (14, 36), for example by means of a conical stud (14) on one of the holding device parts (10, 30) that interacts with a matching form-fitting conical depression (36) of the other holding device part (10, 30).

3. Method according to Claim 2, **characterized in that** the first holding device part (10) is connected to the at least one second holding device part (30) after reaching the relative position in relation to one another in at least one direction of movement by the at least one guiding mechanism (14, 36).

4. Method according to one of the preceding claims, **characterized in that** the first holding device part (10) and the at least one second holding device part (30) are connected to one another in at least one direction of movement before the second handling step is carried out, for example by hooking (76, 78) the holding device parts (72, 74, 92, 94) into one another during the first handling step or clamping a suitable clamping device around the holding device parts.

5. Method according to one of the preceding claims, **characterized in that**, in at least one of the two handling steps, the movement has precisely one degree of freedom, for example along a straight line and/or a segment of a circular path.

6. Method according to one of the preceding claims, **characterized in that**, in the second handling step, a force of resistance which is predetermined by the type of connection of the molded pieces to be connected is overcome during the movement of the molded pieces into the connecting position.

7. Method according to one of the preceding claims, **characterized in that** the first holding device part (10) and/or the at least one second holding device part (30) is/are moved during the first handling step by a suitable manipulator in each case.

8. Method according to one of the preceding claims, **characterized in that** at least one molded piece is held in at least one holding device part by means of an openable fixing device (38) until the connecting position is reached and **in that** this fixing device (38) is opened after the connecting position is reached.

9. Method according to one of the preceding claims, **characterized in that**, after connecting the molded pieces, the first holding device part (10) and the at least one second holding device part (30) are moved into a further relative position in relation to one another without a common contact area, the connected molded pieces initially remaining as a subassembly in one of the holding device parts (10, 30) .

10. Method according to Claim 9, **characterized in that** that holding device part (10, 30) in which the subassembly or the connected molded pieces is/are located is moved from one assembly position into a further assembly position.

11. Method according to Claim 9 or 10, **characterized in that** further molded pieces are connected to the subassembly.

12. Connecting device for connecting molded pieces comprising a first holding device part (10) and at least one second holding device part (30) for holding in each case at least one molded piece, the second holding device part (30) having a first two-dimensionally extended frame (32) in which the molded piece is held, the first holding device part (10) and the at least one second holding device part (30) can be moved into a relative position with a common contact area, the contact area being configured as a common contact area of the first two-dimensionally configured frame (32) with the first holding device part (10), **characterized in that** at least one of the holding device parts has at least one moving device (40) by which a respective molded piece can be moved, in the plane which is spanned by the two-dimensional extent of the first frame (32) in relation to the respective holding device part from a starting position into a respective end position.

13. Connecting device according to Claim 12, **characterized in that** at least one of the holding device parts has at least one fixing device (16, 38) for fixing and/or holding a molded piece.

14. Connecting device according to Claim 13, **characterized in that** the fixing device (38) is releasable.

15. Connecting device according to one of Claims 12 to 14, **characterized in that** the first holding device part (10) and the at least one second holding device part (30) interact by way of guiding elements adapted to one another, by which mutual movement in the direction of the relative position in relation to one another can be guided.

16. Connecting device according to Claim 15, **characterized in that** at least two holding device parts (10, 30) can be connected to one another by the respective guiding mechanism (14, 36) in their relative position in relation to one another in a force-fitting manner, at least in one direction of movement.

17. Connecting device according to one of Claims 12 to 16, **characterized in that** at least two holding device parts (10, 30) can be connected to one another in their relative position in relation to one another, at least in one direction of movement, by a suitable connecting means.

18. Connecting device according to one of Claims 12 to 17, **characterized in that** at least one of the holding device parts (10, 30) has a first component (32) and a second component (34), which can be moved in relation to one another under the action of a force along a predetermined guiding path (48) from a starting position into an end position, the first component (32) having the at least one fixing device (38) and the second component being able to be connected to a manipulator.

19. Connecting device according to one of Claims 12 to 18, **characterized in that** the at least one moving device (40) has precisely one degree of freedom of movement, for example along a straight line and/or a segment of a circular path.

20. Connecting device according to one of Claims 12 to 19, **characterized in that** at least one holding device part (10, 30) can be moved by means of a suitable manipulator, for example a robot.

## Revendications

1. Procédé pour assembler des pièces moulées, au moins une première pièce moulée étant retenue dans une première partie du dispositif de retenue (10), au moins une deuxième pièce moulée étant retenue dans au moins une deuxième partie du dispositif de retenue (30), la deuxième partie du dispositif de retenue (30) présentant un premier cadre (32) s'étendant à plat, dans lequel est retenue la pièce moulée, les parties du dispositif de retenue (10, 30) étant déplacées dans une première étape de manipulation dans une position relative l'une par rapport à l'autre avec une surface de contact commune, la surface de contact étant réalisée en tant que surface de contact commune du premier cadre réalisé à plat (32) avec la première partie du dispositif de retenue (10), **caractérisé en ce que** dans une deuxième étape de manipulation, sans changer la position relative, l'au moins une première pièce moulée et l'au moins une deuxième pièce moulée sont déplacées l'une par rapport à l'autre, au moyen d'au moins un dispositif de déplacement (40) pouvant être déplacé par rapport à l'une des parties du dispositif de retenue (10, 30), dans le plan qui est formé par l'étendue à plat du premier cadre (32), jusqu'à ce qu'une position d'assemblage des pièces moulées respectives l'une à l'autre, produite par engagement par correspondance de formes et/ou par force, soit obtenue avec une surface de contact commune.

2. Procédé selon la revendication 1, **caractérisé en ce que** le déplacement des parties du dispositif de retenue (10, 30, 72, 74, 92, 94) dans la position relative les unes par rapport aux autres est guidé au moins en partie par au moins un mécanisme de guidage mécanique (14, 36), par exemple au moyen d'un tourillon conique (14) au niveau de l'une des parties du dispositif de retenue (10, 30) qui coopère avec un renfoncement conique (36) à engagement par correspondance de formes adapté de l'autre partie du dispositif de retenue (10, 30).

3. Procédé selon la revendication 2, **caractérisé en ce que** la première partie du dispositif de retenue (10) est assemblée à l'au moins une deuxième partie du dispositif de retenue (30) par l'au moins un mécanisme de guidage (14, 36) après l'obtention de la position relative l'une par rapport à l'autre dans au moins une direction de déplacement.

4. Procédé selon l'une quelconque des revendications précédentes, **caractérisé en ce que** la première partie du dispositif de retenue (10) et l'au moins une deuxième partie du dispositif de retenue (30) sont assemblées l'une à l'autre avant la réalisation de la deuxième étape de manipulation dans au moins une direction de déplacement, par exemple par un accrochage mutuel (76, 78) des parties du dispositif de retenue (72, 74, 92, 94) pendant la première étape de manipulation ou un serrage des parties du dispositif de retenue au moyen d'un dispositif d'assemblage approprié.

5. Procédé selon l'une quelconque des revendications précédentes, **caractérisé en ce que** le déplacement dans au moins l'une des deux étapes de manipulation présente exactement un degré de liberté, par exemple le long d'une droite et/ou d'un segment d'une trajectoire circulaire.

6. Procédé selon l'une quelconque des revendications précédentes, **caractérisé en ce que** dans la deuxième étape de manipulation, lors du déplacement des pièces moulées dans la position d'assemblage, une force de résistance est surmontée, laquelle est prédéfinie par le type d'assemblage des pièces moulées à assembler.

7. Procédé selon l'une quelconque des revendications précédentes, **caractérisé en ce que** la première partie du dispositif de retenue (10) et/ou l'au moins une deuxième partie du dispositif de retenue (30) sont déplacées pendant la première étape de manipulation à chaque fois par un manipulateur approprié.

8. Procédé selon l'une quelconque des revendications précédentes, **caractérisé en ce qu'**au moins une pièce moulée, jusqu'à l'obtention de la position d'assemblage, est retenue dans au moins une partie du dispositif de retenue au moyen d'un dispositif de fixation (38) pouvant être ouvert et **en ce que** ce dispositif de fixation (38) est ouvert après l'obtention de la position d'assemblage.

9. Procédé selon l'une quelconque des revendications précédentes, **caractérisé en ce que** la première partie du dispositif de retenue (10) et l'au moins une deuxième partie du dispositif de retenue (30), après l'assemblage des pièces moulées, sont déplacées dans une position relative supplémentaire l'une par rapport à l'autre sans surface de contact commune, les pièces moulées assemblées restant d'abord en tant que module dans l'une des parties du dispositif de retenue (10, 30).

10. Procédé selon la revendication 9, **caractérisé en ce que** la partie du dispositif de retenue (10, 30) dans laquelle se trouvent les modules ou les pièces moulées assemblées est déplacée d'une position de montage dans une autre position de montage.

11. Procédé selon la revendication 9 ou 10, **caractérisé en ce que** des pièces moulées supplémentaires sont assemblées au module.

12. Dispositif d'assemblage pour l'assemblage de pièces moulées, comprenant une première partie du dispositif de retenue (10) et au moins une deuxième partie du dispositif de retenue (30) pour retenir à chaque fois au moins une pièce moulée, la deuxième partie du dispositif de retenue (30) présentant un premier cadre étendu à plat (32) dans lequel est retenue la pièce moulée, la première partie du dispositif de retenue (10) et l'au moins une deuxième partie du dispositif de retenue (30) pouvant être déplacées dans une position relative avec une surface de contact commune, la surface de contact étant réalisée sous forme de surface de contact commune du premier cadre réalisé à plat (32) avec la première partie du dispositif de retenue (10), **caractérisé en ce qu'**au moins l'une des parties du dispositif de retenue présente au moins un dispositif de déplacement (40) par lequel une pièce moulée respective peut être déplacée dans le plan formé par l'étendue à plat du premier cadre (32), par rapport à la partie du dispositif de retenue respective, d'une position initiale dans une position finale respective.

13. Dispositif d'assemblage selon la revendication 12, **caractérisé en ce qu'**au moins l'une des parties du dispositif de retenue présente au moins un dispositif de fixation (16, 38) pour retenir et/ou fixer une pièce moulée.

14. Dispositif d'assemblage selon la revendication 13, **caractérisé en ce que** le dispositif de fixation (38) est amovible.

15. Dispositif d'assemblage selon l'une quelconque des revendications 12 à 14, **caractérisé en ce que** la première partie du dispositif de retenue (10) et l'au moins une deuxième partie du dispositif de retenue (30) coopèrent avec des éléments de guidage adaptés les uns aux autres par le biais desquels un mouvement mutuel dans la direction de la position relative l'une par rapport à l'autre peut être guidé.

16. Dispositif d'assemblage selon la revendication 15, **caractérisé en ce qu'**au moins deux parties du dispositif de retenue (10, 30) peuvent être assemblées l'une à l'autre par engagement par force par le mécanisme de guidage respectif (14, 16) dans leur position relative l'une par rapport à l'autre au moins dans une direction de déplacement.

17. Dispositif d'assemblage selon l'une quelconque des revendications 12 à 16, **caractérisé en ce qu'**au moins deux parties du dispositif de retenue (10, 30) peuvent être assemblées l'une à l'autre dans leur position relative l'une par rapport à l'autre par un moyen d'assemblage approprié au moins dans une direction de déplacement.

18. Dispositif d'assemblage selon l'une quelconque des revendications 12 à 17, **caractérisé en ce qu'**au moins l'une des parties du dispositif de retenue (10, 30) présente un premier composant (32) et un deuxième composant (34), qui peuvent être déplacés l'un par rapport à l'autre d'une position de départ dans une position finale lors de l'application d'une force le long d'une trajectoire de guidage prédéfinie (48), le premier composant (32) présentant l'au moins un dispositif de fixation (38) et le deuxième composant pouvant être assemblé avec un manipulateur.

19. Dispositif d'assemblage selon l'une quelconque des revendications 12 à 18, **caractérisé en ce que** l'au moins un dispositif de déplacement (40) présente exactement un degré de liberté de mouvement, par exemple le long d'une droite et/ou d'un segment d'une trajectoire circulaire.

20. Dispositif d'assemblage selon l'une quelconque des revendications 12 à 19, **caractérisé en ce qu'**au moins une partie du dispositif de retenue (10, 30) peut être déplacée au moyen d'un manipulateur approprié, par exemple un robot.
